# EUROPÄISCHE PATENTSCHRIFT

(11) **EP 3 010 762 B1**
(45) Veröffentlichungstag und Bekanntmachung des Hinweises auf die Patenterteilung: **04.12.2024**
(21) Anmeldenummer: 14724749.8
(22) Anmeldetag: 16.05.2014
(51) Int. Cl.: F02N 11/08, F02N 15/00, H01R 11/28, H01M 50/55

(54) **POLNISCHENINTEGRIERTER STARTSTROMBEGRENZER**
POLE-RECESS-INTEGRATED STARTING-CURRENT LIMITER
LIMITEUR DE COURANT DE DÉMARRAGE INTÉGRÉ DANS UNE NICHE POLAIRE

(30) Priorität: 19.06.2013 DE 102013010166
(43) Veröffentlichungstag der Anmeldung: 27.04.2016
(73) Patentinhaber: Auto-Kabel Management GmbH, 79688 Hausen i.W. (DE)
(72) Erfinder: GRONWALD, Frank, 50181 Bedburg (DE); KAMPMANN, Robert, 41236 Mönchengladbach (DE); TAZARINE, Wacim, 41239 Mönchengladbach (DE); BETSCHER, Simon, 41515 Grevenbroich (DE)
(74) Vertreter: Cohausz & Florack
(86) Internationale Anmeldenummer: PCT/EP2014/060126
(87) Internationale Veröffentlichungsnummer: WO 2014/202297

(56) Entgegenhaltungen:
- EP-A2- 0 725 412
- WO-A1-90/09598
- DE-A1- 102009 011 891
- DE-A1- 102011 014 022
- DE-A1- 102011 014 023
- US-A1- 2008 194 152

## Beschreibung

Der Gegenstand betrifft ein Startstrombegrenzungssystem, insbesondere für Kraftfahrzeuge mit einem Verbrennungsmotor, umfassend zumindest ein erstes mit einem Batteriepol verbindbares elektrisches Anschlussteil, ein zweites mit einem Starter verbindbares elektrisches Anschlussteil, und eine zwischen dem ersten Anschlussteil und dem zweiten Anschlussteil geschaltete Parallelschaltung aus einem Zweig mit einer Stromstärke-Steuerungseinrichtung und einem Zweig mit einem elektrischen Widerstand.

Verbrennungsmotoren in Kraftfahrzeugen bieten im Stillstand kein Drehmoment. Aus diesem Grunde können solche Verbrennungsmotoren nicht selbstständig durch Einspritzen von Kraftstoff gestartet werden. Dies bedingt, dass der Verbrennungsmotor bzw. die Brennkraftmaschine innerhalb des Fahrzeugs mit einem Drehmoment beaufschlagt werden muss, um zu starten. Dieses Drehmoment wird in der Regel durch einen Starter bzw. eine elektrische Maschine zur Verfügung gestellt. Eine solche elektrische Maschine ist zum Starten bzw. Anlassen des Verbrennungsmotors notwendig.

Der Starter des Verbrennungsmotors wird von der Batterie des Kraftfahrzeugs gespeist. Im Moment des Startens, d.h. zum Anlaufen des Starters, ist dessen induktive Last niederohmig und ein sehr hoher Strom fließt von der Batterie über den Starter. Die Induktivität des Starters stellt im Moment des Startens nahezu einen Kurzschluss dar. Der hierdurch bedingte hohe Stromfluss führt zu Einbrüchen der Batteriespannung an den Batteriepolen. Bei einem typischen Startvorgang eines Fahrzeugs bricht die Batteriespannung nach einer kurzen Zeit unter einen Grenzwert ein. In der Folge kann es daher dazu kommen, dass andere Verbraucher im Bordnetz des Fahrzeugs, welche eine Mindestspannung benötigen, nicht mehr mit ausreichend elektrischer Energie versorgt werden können.

Der Spannungseinbruch tritt bei allen Fahrzeugen mit Verbrennungsmotor beim Startvorgang auf, wenn der Verbrennungsmotor mittels eines Starters gestartet wird. Fahrzeuge können beispielsweise Automobile, Schienenfahrzeuge oder Luftfahrzeuge sein. Ferner sind auch Schiffe, Fahrzeuge im Sinne des Gegenstandes.

Um diesen Spannungseinbruch beim Startvorgang, insbesondere im Start-Stopp Betrieb, wie er heute zur Kraftstoffeinsparung üblich geworden ist, zu verhindern, existieren eine Vielzahl von Spannungsstützkonzepten, wie beispielsweise die Verwendung von Stützkondensatoren, die Verwendung von zusätzlichen Batterien als auch der Einsatz von Startstrombegrenzungssystemen.

Ein Startspannungs- bzw. Startstrombegrenzungssystem ist auch bekannt als Startspannungseinbruchsbegrenzer (SEB), Start Current Limiter (SCL), Voltage Drop Limiter (VDL) oder dergleichen. Ein solches Startstrombegrenzungssystem begrenzt den Startspannungseinbruch durch Reduzierung des Stroms, der von der Batterie zum Starter fließt. Es werden dabei weiterhin Spannungseinbrüche bis zu einer definierten Untergrenze in Kauf genommen. Außerdem wird eine Startzeitverzögerung in Kauf genommen, da der Starter im Startvorgang nicht die komplette verfügbare elektrische Energie der Batterie zur Verfügung gestellt bekommt, sondern nur eine begrenzte.

Die DE 10 2011 014 023 A1 beschreibt ein Startstrombegrenzungssystem mit einem ersten an einem Kraftfahrzeugbatteriepol anschließbaren elektrischen Anschluss, einem zweiten an einem Starter anschließbaren elektrischen Anschluss und einer zwischen dem ersten Anschluss und dem zweiten Anschluss geschalteter Parallelschaltung.

Die US 2008/0194152 A1 offenbart einen Anschluss, der zum Herstellen einer elektrischen Verbindung mit einer beliebigen Anzahl von Batterien geeignet ist. Die Verbindung enthält eine beliebige Anzahl von Merkmalen zur Beurteilung der mit der Batterie verbundenen Betriebseigenschaften, wie z. B. die Stromspannung und die Temperatur, ist jedoch nicht auf diese beschränkt.

Während des Anlassvorgangs mit einer konventionellen Batterie bricht die Batteriespannung nach weniger Millisekunden unter 8 Volt ein. Dieser anfängliche Spannungseinbruch wirkt auf alle an die Batterie angeschlossenen elektrischen Verbraucher. Der anfängliche Spannungseinbruch, der nur kurzfristig auftritt, könnte beispielsweise durch vorgeschaltete Pufferkondensatoren kompensiert werden. Bei einem herkömmlichen Anlassvorgang erholt sich die Spannung der Batterie unmittelbar nach dem Starten kurzzeitig auf über 9 Volt, um dann jedoch erneut unter 9 Volt einzubrechen. Dieser zweite Spannungseinbruch kann durch herkömmliche Pufferkondensatoren nicht aufgefangen werden, da deren Kapazität lediglich zur Kompensation des ersten Spannungseinbruchs ausreicht. Die Pufferkondensatoren sind regelmäßig nach dem ersten Spannungseinbruch entladen und der zweite Spannungseinbruch während eines Startvorgangs führt zu Problemen innerhalb des Bordnetzes. Insbesondere Motorsteuergeräte als auch Airbagsteuergeräte sowie sonstige Steuergeräte können kurzfristig ausfallen, da nicht jedes Steuergerät auf ein solch niedriges Spannungsniveau von unter 9 Volt ausgelegt ist.

Startstrombegrenzungssysteme sind in der Regel zwischen der Batterie und dem Starter angeordnet. Herkömmliche Bordnetztopologien beinhalten eine Batterie, einen Starter, einen Generator sowie ein Verbrauchernetzwerk. Je nach Konzept wird der Starter und der Generator mit jeweils einer getrennten Leitung versorgt oder mit einer kombinierten Starter-Generatorleitung. Um Kurzschlüsse im Fall eines Crashes zu verhindern, wird die Starterleitung oder die Starter-Generatorleitung durch eine sogenannte Sicherheitsbatterieklemme vom Bordnetz irreversibel getrennt.

Um den Spannungseinbruch an der Batterie zu begrenzen, muss zusätzlich zu der Sicherung im Crashfall ein Startstrombegrenzungssystem vorgesehen werden.

Bei einem Startstrombegrenzungssystem herkömmlicher Art wird in der Starterleitung eine Parallelschaltung aus einem Zweig mit einem Widerstand und einem Zweig mit einem Schalternetz, beispielsweise mit Halbleiterschaltern, vorgesehen. Im Moment des Anlassens des Verbrennungsmotors wird das Schalternetzwerk geöffnet und Strom fließt ausschließlich über den Widerstand. Dies führt zu einer Begrenzung des Startstroms und einer Reduzierung des Spannungseinbruchs an der Batterieklemme. Im Anschluss, beispielsweise nach 100 ms, wird der parallele Zweig mit den Schaltern geschlossen. Der Gesamtwiderstand der Parallelschaltung verringert sich und es fließt ein erhöhter Strom von der Batterie zum Starter. Der Strom über den Zweig mit den Schaltern lässt sich durch eine Art Pulsbetrieb der Schalter einstellen, indem sich durch gepulstes Ein- und Ausschalten der Schalter ein über die Zeit gemittelter Widerstand dieses Zweiges einstellt.

Nach dem Startvorgang kann das Schalternetzwerk wieder geöffnet werden, da der Starter keinen zusätzlichen Strom mehr benötigt.

Die Vielzahl der Funktionskomponenten innerhalb des Startstrombegrenzungssystems führen jedoch zu einer erheblichen Herausforderung hinsichtlich des zur Verfügung stehenden Bauraums. Insbesondere im Bereich der Fahrzeugbatterie ist der verfügbare Bauraum sehr begrenzt, so dass zusätzliche Funktionen stets eine konstruktive Herausforderung darstellen.

Somit lag dem Gegenstand die Aufgabe zugrunde, ein Startstrombegrenzungssystem zur Verfügung zu stellen, welches in besonders einfacher Weise in bestehende Bauräume integrierbar ist.

Diese Aufgabe wird durch ein Startstrombegrenzungssystem nach Anspruch 1 gelöst.

Gegenständlich wird vorgeschlagen, dass neben dem zweiten Zweig mit dem elektrischen Widerstand auch der erste Zweig mit der Stromstärke-Steuerungseinrichtung und ggf. das erste Anschlussteil räumlich innerhalb einer Polnische des Batteriepols angeordnet sind.

Eine Batterie ist regelmäßig mit einer genormten Polnische versehen. Insbesondere die DIN-Normen DIN EN 50342-2 sowie DIN 72311 geben Normmaße für die Polnische sowie einen zwischen den Polnischen verlaufenden Gehäuseversatz der Batterie an. Die Polnische ist dabei der Bereich, der den Batteriepol aufweist und durch Seitenwände der Batterie einerseits und Außenkanten der Batterie andererseits begrenzt ist. Vorzugsweise weist die Polnische ein maximales Maß von 60 mm an 72,5 mm auf. Die Höhe der Polnische ist regelmäßig zwischen 30 und 40 mm, vorzugsweise unterhalb von 35 mm. Innerhalb dieses Bauraums, vorzugsweise unter Verwendung des zwischen den Polnischen verlaufenden länglichen Versatzes ist das gegenständliche Stromstärkebegrenzungssystem angeordnet. Es versteht sich, dass die gegenständliche räumliche Anordnung des Zweigs aus elektrischem Widerstand, des Zweigs aus Stromstärke-Steuerungseinrichtung und des ersten Anschlussteils innerhalb der Polnische so verstanden werden muss, dass hiermit gemeint ist, dass diese Baugruppen größtenteils hierin angeordnet sind. Sollte eine der Baugruppen teilweise außerhalb der Polnische liegen, das Startstrombegrenzungssystem jedoch weiterhin größtenteils innerhalb der Polnische, so ist dies von der Bedeutung des Begriffs räumlich innerhalb der Polnische umfasst.

Der Widerstand, der zur Reduzierung des Startstroms zu Beginn des Anlassens verwendet wird, ist vorzugsweise niederohmig und kann aus einem einstückigen Widerstandsleiter gebildet sein. Dieser Widerstandsleiter kann aus einer Kupferlegierung, beispielsweise Manganin, einer Eisenlegierung, z.B. Edelstahl und Stahl, einer Aluminiumlegierung oder einer sonstige metallischen Legierung gebildet sein. Der Widerstand ist vorzugsweise aus einem Band oder Blech geformt und als Flachteil gebildet. Das Flachteil kann an die Bauraumbedingungen angepasst werden, in dem es vor dem Einbau vorgeformt ist, insbesondere gebogen ist.

Insbesondere kann der Widerstand so geformt sein, dass zumindest ein Abschnitt parallel zu einer Begrenzungswand und/oder einer Außenkante der Polnische verläuft. Hierdurch lässt sich der Widerstand besonders eng an die Polnische bzw. dessen Begrenzungswände oder Außenkanten anschmiegen. Auch ist vorgeschlagen, dass der Widerstand in Teilen entlang der Begrenzungswand der Polnische oder der Außenkante der Polnische geführt ist. Dies bedeutet, dass der Widerstand in einem Abstand zwischen 1 und 10 mm von der Begrenzungswand bzw. der Außenkante in Teilen geführt ist. Dies führt zu einer optimalen Ausnutzung des Bauraums, da in der vom Widerstand umfassten Fläche die Batteriepolklemme und/oder das Schalternetz und/oder das erste Anschlussteil und/oder dergleichen geführt werden können.

Vorzugsweise ist der Widerstand als formstabiler Winkel gebildet, der der gesamten Baugruppe Formstabilität verleiht.

Eine besonders enge Bauweise ist dann möglich, wenn der Widerstand als Flachteil gebildet ist und seine Breitenausdehnungsrichtung parallel zu einer Längsachse des Batteriepols bzw. der Batteriepolklemme verläuft. Die Bauhöhe der Polnische wird dann optimal bei minimalem Flächenverbrauch innerhalb der Polnische durch den Widerstand ausgenutzt, wenn sich seine Erstreckung in Breitenausdehnungsrichtung über im Wesentlichen die Bauhöhe der Polnische erstreckt.

Der Widerstand ist vorzugsweise mit dem ersten Anschlussteil verbunden. Hierbei kann die Verbindung entweder unmittelbar durch Kurzschluss erfolgen oder über ein Schalternetz, insbesondere gebildet aus Halbleiterschaltern, wie nachfolgend noch erwähnt werden wird. Die Verbindung zwischen dem Widerstand und dem Anschlussteil kann stoffschlüssig sein. Auch ist eine Verschraubung möglich. Andere Verbindungen, beispielsweise ein Vernieten, ist ebenfalls möglich.

Das erste Anschlussteil ist vorzugsweise eine Batteriepolklemme. Eine Batteriepolklemme umfasst zumindest zwei Klemmbacken, die den Pol umgreifen und mittels einer Verschraubung mit dem Pol kraftschlüssig verbunden werden können. An den Klemmbacken können Abgänge vorgesehen sein, insbesondere ein erster Abgang für das erste Anschussteil und ein zweiter Abgang, beispielsweise für die Verbindung des Batteriepols mit dem Verbrauchernetz des Fahrzeugs. Diese Verbindung muss, wie eingangs bereits erläutert, nicht derart abgesichert sein, dass hierüber ein Spannungseinbruch an den Batteriepolen erfolgen könnte. Der zweite Abgang kann in einer von dem Widerstand aufgespannten Fläche der Polnische liegen. Der Abgang kann zwischen dem Widerstand und der Polklemme angeordnet sein.

Für eine Bauraumoptimierung kann es sinnvoll sein, den Zweig mit dem Widerstand und den Zweig mit der Stromstärke-Steuerungseinrichtung an unterschiedlichen Stellen z.B. mit unterschiedlichen radialen Abgangsrichtungen bzw. Winkeln an dem Batteriepol zu befestigen, insbesondere an unterschiedliche Stellen an der Batteriepolklemme. Um dies zu ermöglichen, kann das erste Anschlussteil nicht nur monolithisch, einstückig sein, sondern auch aus zwei räumlich voneinander getrennt angeordneten Abgriffen gebildet sein. Ein erster Abgriff kann mit der Batteriepolklemme vorzugsweise stoffschlüssig verbunden sein. Ein zweiter Abgriff kann ebenfalls mit der Batteriepolklemme vorzugsweise stoffschlüssig verbunden sein. Die beiden Abgriffe können räumlich voneinander getrennt sein und ausschließlich über die Batteriepolklemme miteinander elektrisch in Verbindung stehen. An den ersten Abgriff kann der Zweig mit der Stromstärke-Steuerungseinrichtung angeschlossen werden. An den zweiten Abgriff kann der Zweig mit dem elektrischen Widerstand angeschlossen werden. Die beiden Abgriffe sind elektrisch auf dem selben Potential, da diese über die Batteriepolklemme miteinander elektrisch kurzgeschlossen sind. Räumlich sind die Abgriffe jedoch getrennt voneinander, beispielsweise in verschiedenen Winkeln von der Batteriepolklemme weg weisend angeordnet, so dass sich eine Bauraumoptimierung erreichen lässt.

Wie erwähnt, kann das erste Anschlussteil auch einstückig sein. Insbesondere kann das erste Anschlussteil eine Stromverteilschiene sein. Diese kann beispielsweise als Flachteil gebildet sein. Insbesondere kann das Flachteil der Stromverteilschiene und das Flachteil des Widerstands so angeordnet sein, dass deren Breitenausdehnungsrichtungen parallel zueinander verlaufen. Insbesondere ist dies im Wesentlichen parallel zur Längsausbreitungsrichtung des Batteriepols bzw. der Batteriepolklemme.

Eine optimale Bauraumausnutzung kann insbesondere dann gewährleistet sein, wenn sich die Stromverteilschiene in zumindest zwei verschiedenen Ebenen ausbreitet. Eine erste Ebene kann parallel zur Längsrichtung des Batteriepols bzw. der Batteriepolklemme verlaufen. Eine zweite Ebene kann senkrecht zu der Längsrichtung des Batteriepols bzw. der Batteriepolklemme verlaufen. Im Bereich der zweiten Ebene kann ein erster Anschlussbereich vorgesehen sein, um die Stromverteilschiene mit der Batteriepolklemme zu verbinden. Winklig hierzu, insbesondere rechtwinklig hierzu, kann der zweite Anschlussbereich der Stromverteilschiene verlaufen, der parallel zur Längsausbreitungsrichtung des Batteriepols verläuft. Dieser zweite Anschlussbereich kann zum Anschluss an sowohl den Zweig mit dem Widerstand als auch den Zweig mit der Stromstärke-Steuerungseinrichtung dienen. Hierzu kann beispielsweise an zwei distalen Enden des zweiten Anschlussbereiches der Stromverteilschiene jeweils ein Anschluss für entweder den Zweig mit dem Widerstand oder den Zweig mit Stromstärke-Steuerungseinrichtung vorgesehen sein. Diese beiden distalen Enden können an unterschiedlichen Schenkeln der Stromverteilschiene angeordnet sein, insbesondere wenn die Stromverteilschiene ein Winkel, insbesondere ein formstabiler Winkel ist. Die Enden des zweiten Anschlussbereiches können so geformt sein, dass sie in ein jeweiliges Gehäuse eingreifen, in dem jeweils ein Schalternetz vorgesehen ist, um die Stromverteilschiene einerseits an den Widerstand anzuschließen und andererseits die Stromstärke-Steuerungseinrichtung zu bilden. Durch die jeweiligen Gehäuse können die Schalter der Schalternetze, die insbesondere Halbleiterschalter sind, vor Umwelteinflüssen geschützt sein.

Insbesondere der zweite Anschlussbereich der Stromverteilschiene kann als Flachteil gebildet sein. Als solcher kann dieser abschnittsweise parallel zu einer Begrenzungswand oder einer Außenkante der Polnische verlaufen oder entlang der Begrenzungswand bzw. der Außenkante der Polnische geführt sein. Dies führt einerseits zu einer optimalen Flächennutzung und andererseits zu einem größtmöglichen Bauraum der durch den zweiten Anschlussbereich umgriffen ist.

Ein Anschluss für ein Generator oder ein Verbrauchernetz innerhalb der Kraftfahrzeugs kann entweder an dem ersten Anschlussteil der Stromverteilschiene angeordnet sein oder unmittelbar an der Batteriepolklemme als weiterer Abgang neben dem Abgang zu dem ersten Anschlussteil vorgesehen sein.

Die Einstellung der Stromstärke im Fall des Anlassens des Verbrennungsmotors erfolgt durch Zu- und Abschalten einer Stromstärke-Steuerungseinrichtung. In einem gepulsten Betrieb können Schalter ein- und ausgeschaltet werden, um somit einen gemittelten Widerstand der Stromstärke-Steuerungseinrichtung einzustellen. Hierzu eignen sich Halbleiterschalter. Entsprechend der geforderten Stromtragfähigkeit können Halbleiterschalter innerhalb der Stromstärke-Steuerungseinrichtung parallel zueinander vorgesehen sein. Nach dem Anlassen benötigt der Starter keinen weiteren Strom. Um Korrosionen an der Starterleitung zu verhindern und die Starterleitung potentialfrei schalten zu können, wird vorgeschlagen, dass auch in dem Zweig mit dem elektrischen Widerstand zumindest ein zweites Schalternetz vorgesehen ist. Wenn nach dem Startvorgang, wenn der Verbrennungsmotor bereits angelassen wurde, sowohl das erste Schalternetz als auch das zweite Schalternetz geöffnet werden, ist die Leitung zwischen dem Startstrombegrenzungssystem und dem Starter vollständig von der Batterie getrennt. Diese Trennung ist reversibel und kann beim nächsten Startvorgang wieder aufgehoben werden. Auch die Schalter innerhalb des Zweigs mit dem elektrischen Widerstand können so ausgelegt sein, dass die notwendige Stromtragfähigkeit im Moment des Anlassens gegeben ist.

Wie bereits erläutert, ist die maximale Stromtragfähigkeit im Moment des Anlassens durch das Schalternetz im Zweig des elektrischen Widerstandes zu gewährleisten. Insofern kann das erste Schalternetz aus zumindest zwei elektrisch parallel geschalteten Schaltern gebildet sein, so dass die Stromtragfähigkeit jedes einzelnen Schalters geringer ausfallen kann.

Gemäß einem Ausführungsbeispiel wird vorgeschlagen, dass der Zweig mit der Stromstärke-Steuerungseinrichtung überwiegend innerhalb eines ersten Kreissegments um den Batteriepol herum angeordnet ist und dass der Zweig mit dem elektrischen Widerstand überwiegend innerhalb eines zweiten vom ersten Kreissegment verschiedenen Kreissegments um den Batteriepol heran angeordnet ist. Dies führt zu einer optimalen Bauraumausnutzung. Es versteht sich, dass sich die Kreissegmente teilweise überschneiden können, solange eine überwiegende Fläche des Kreissegments nicht überschneidend ist. Mit anderen Worten kann der Zweig mit dem elektrischen Widerstand teilweise in das erste Kreissegment ragen und umgekehrt der Zweig mit der Stromstärke-Steuerungseinrichtung teilweise in das zweite Kreissegment.

Nachfolgend wird der Gegenstand anhand einer Ausführungsbeispiele zeigenden Zeichnung näher erläutert. In der Zeichnung zeigen:
- Fig. 1: einen Spannungsverlauf an einer konventionellen Batterie während eines Anlassvorgangs ohne Startspannungseinbruchsbegrenzung;
- Fig. 2: eine schematische Netztopologie zwischen Batterie, Starter, Generator und Verbraucher mit einer Startspannungseinbruchsbegrenzung, die nicht Teil der Erfindung ist.
- Fig. 3: eine schematische Topologie eines Startstrombegrenzungssystems mit reversibler Abschaltung;
- Fig. 4a: eine Ansicht eines Batteriepols;
- Fig. 4b: eine Draufsicht auf eine Batterie mit Batteriepolen;
- Fig. 5: eine schematische Draufsicht auf eine räumliche Anordnung eines Startstrombegrenzungssystems;
- Fig. 6: eine Draufsicht auf eine weitere räumliche Anordnung eines Startstrombegrenzungssystems;
- Fig. 7: eine Ansicht einer möglichen Anordnung eines Startstrombegrenzungssystems.

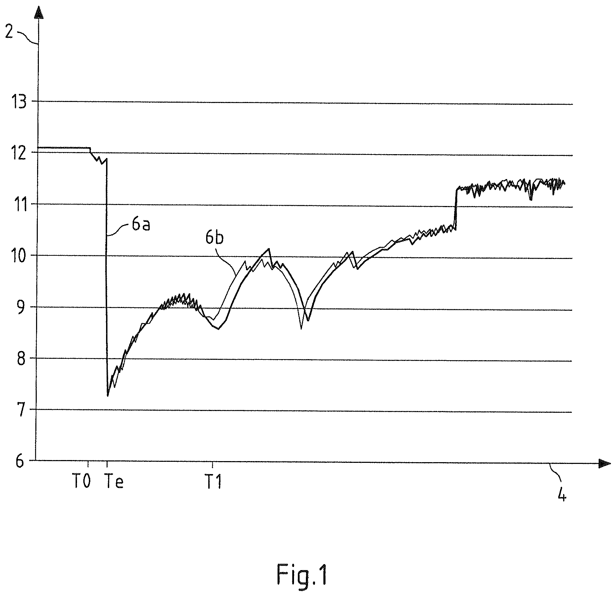

Fig. 1 zeigt den Verlauf der Spannung 2 über eine Zeit 4 von ca. einer Sekunde während eines Anlassvorgangs. Gezeigt sind zwei Spannungsverläufe 6a und 6b, die typisch für einen Anlassvorgang sind. Die Spannungsverläufe sind vorzugsweise zwischen dem Batteriepluspol und dem Batterieminuspol abgegriffen. Zu erkennen ist, dass die Spannungsverläufe 6a, 6b ähnlich zueinander sind. Die Spannungsverläufe 6a, 6b zeigen das herkömmliche, nicht geregelte Verhalten einer Spannung an Batteriepolen im Anlassvorgang.

Zu erkennen ist, dass im Moment des Anlassens zum Zeitpunkt Te die Spannungen einbrechen und die Spannung unterhalb einen Spannungswert von 8 Volt einbricht. Anschließend erholt sich die Spannung, um zu einem Zeitpunkt T1 erneut unterhalb eines Spannungswerts von 9 Volt einzubrechen. Im Anschluss daran erholt sich die Spannung weiter und erreicht nach ca. 1 Sekunde den Ausgangswert von ca. 12 Volt.

Der erste Spannungseinbruch zum Zeitpunkt Te kann durch Pufferkondensatoren in den Steuergeräten abgefangen werden, so dass dieser nicht unterhalb von 9 Volt liegt. Danach sind jedoch die Pufferkondensatoren entladen und spätestens zum Zeitpunkt T1, bei dem erneuten Spannungseinbruch unter 9 Volt wären Verbraucher im Verbrauchernetzwerk des Fahrzeugs betroffen. Es kann zu Fehlfunktionen und Ausfällen von Verbrauchern kommen. Neben Aussetzern von Navigationssystemen und Entertainmentsystemen innerhalb des Fahrzeugs, welche weniger sicherheitskritisch sind, kann es auch zu Ausfällen von sicherheitsrelevanten Komponenten kommen, was zwingend vermieden werden muss. D.h., dass neben einem Komfortgewinn auch Sicherheitsaspekte für die Startstrombegrenzung relevant sind.

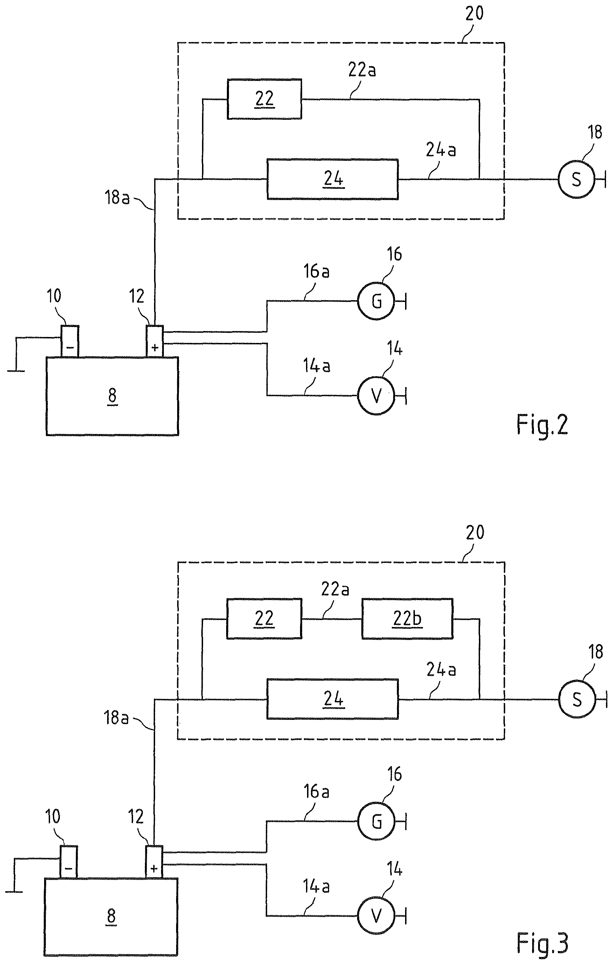

Die elektrische Topologie eines Startstrombegrenzungssystems ist beispielhaft in den Figuren 2 und 3 illustriert.

Fig. 2 zeigt eine Batterie 8 mit einem ersten Batteriepol 10 und einem zweiten Batteriepol 12, wobei der Pol 12 vorzugsweise der Pluspol ist. Vom Batteriepol 12 zweigt eine erste Leitung 14a zu einem Verbrauchernetz 14 ab. Das Verbrauchernetz 14 kann aus Komfortfunktionen, wie beispielsweise Klimaanlage, Navigationssystem, Entertainmentsystem und dergleichen sowie aus sicherheitsrelevanten Systemen, wie beispielsweise Airbagsteuergeräte, Fahrassistentsysteme, Servolenkung und dergleichen gebildet sein. Das Verbrauchernetzwerk 14 benötigt von der Batterie 8 eine konstante Spannung, die regelmäßig oberhalb von 9 Volt liegt. Bricht die Batteriespannung unterhalb einer solchen Grenze ein, kann es zu Fehlfunktionen innerhalb des Verbrauchernetzwerks 14 kommen. Eine weitere Leitung 16a zweigt zu einem Generator 16 ab. Der Generator 16, auch als Lichtmaschine bekannt, stellt im Betrieb eine elektrische Energiequelle dar, um die Batterie 8 aufzuladen.

Ferner ist an dem Pol 12 eine Leitung 18a, die auch als Polklemme ausgeführt sein kann, angeschlossen, die zu einem Starter 18 führt. Der Starter 18 ist eine elektrische Maschine, die dazu benutzt wird, den Verbrennungsmotor anzulassen. Im Moment des Anlassens verfügt der Verbrennungsmotor über kein Drehmoment und kann nur durch ein externes Drehmoment angelassen werden, welches von dem Starter 18 zur Verfügung gestellt wird.

Der Starter 18 ist eine elektrische Maschine mit einem hohen Drehmoment, welche im Stillstand als induktive Last nur einen sehr geringen Widerstand hat. Das bedeutet, dass über den Starter 18 im Moment des Anlassens ein erheblicher Strom von der Batterie 8 fließt, der zu den in Fig. 1 gezeigten Spannungseinbrüchen führen kann. Zur Vermeidung solcher Spannungseinbrüche ist ein Startstrombegrenzungssystem 20 vorgesehen, welches aus einem Zweig 22a mit einem Widerstand 22 und einem Zweig 24a mit einer Stromstärkesteuerungseinrichtung 24 gebildet ist.

Der Betrieb eines solchen Startstrombegrenzungssystems 20 ist hinlänglich bekannt. Im Moment des Anlassens fließt Strom ausschließlich über den Zweig 22a. Nach kurzer Zeit, beispielsweise 100 ms wird der Zweig 24a hinzugeschaltet und es wird eine Parallelschaltung aus Widerstand 22 und Stromstärke-Steuerungseinrichtung 24 gebildet, über die der Strom fließt. Die Stromstärke-Steuerungseinrichtung 24 kann gepulst betrieben werden, so dass sich ein gemittelter Widerstand über den Zweig 24a einstellt. Hierdurch lässt sich die Stromstärke über das Startstrombegrenzungssystem 20 einstellen, derart, dass die Spannung an der Batterie 8 über die Pole 10 und 12 nicht unter 9 Volt abfällt. Eine entsprechende Steuerelektronik ist vorgesehen.

Fig. 3 zeigt eine zu der in Fig. 2 vorgestellte ähnliche Topologie. In Ergänzung zu den in Fig. 2 verwendeten Baugruppen, ist in dem Zweig 22a mit Widerstand 22 ein weiteres Schalternetz 22b vorgesehen. Die Stromstärke-Steuerungseinrichtung 24 als auch das Schalternetz 22b kann durch Halbleiterschalter, insbesondere parallel geschaltete Halbleiterschalter gebildet sein. Die in dem Schalternetz 22b vorhandenen Schalter sind während des Anlassens geschlossen. Nach Abschluss des Anlassvorgangs können die Schalter des Schalternetzes 22b als auch die Schalter der Stromstärke-Steuerungseinrichtung 24 vollständig geöffnet werden, so dass die Leitung 18a zwischen Startstrombegrenzungssystem 20 und Starter 18 potentialfrei ist. Dies verhindert Korrosion an der Leitung 18a und erhöht die Sicherheit im Crashfall.

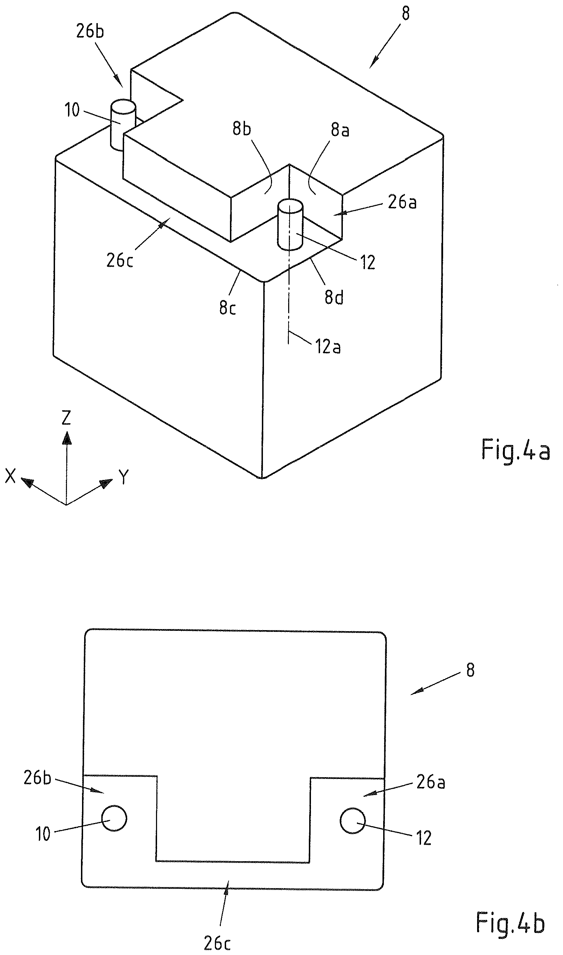

Die vorgestellten Startstrombegrenzungssysteme 20 müssen in verfügbarem Bauraum verbaut werden. Erfindungsgemäß ist erkannt worden, dass dies in der Polnische vorzugsweise des Batteriepluspols 12 möglich ist. Fig. 4a zeigt eine Batterie 8 mit einem Pol 12 und einem Pol 10. Die beiden Pole 10, 12 sind jeweils von einer Polnische 26a, 26b umgeben. Die Polnische 26a ist begrenzt durch die beiden Begrenzungswände 8a und 8b der Batterie 8 sowie der Außenkanten 8c, 8d der Batterie 8.

Die räumliche Ausrichtung der Begrenzungswände 8a, 8b sowie der Außenkanten 8c, 8d wird nachfolgend in dem in Fig. 4a gezeigten x, y, z-Koordinatensystem dargestellt. Die Begrenzungswand 8a verläuft vorzugsweise parallel zur x-z Ebene. Die Begrenzungswand 8b verläuft vorzugsweise parallel zur y-z Ebene. Die Außenkante 8c verläuft parallel zur x-Achse und die Außenwand 8d verläuft parallel zur y-Achse. Die Längsausbreitungsrichtung 12a des Batteriepols 12 bzw. der Batteriepolklemme verläuft parallel zur z-Achse.

Zwischen der Polnische 26a und der Polnische 26b verläuft ein Versatz 26c, dessen Volumen bei der Gestaltung des Startstrombegrenzungssystems 20 mit verwendet werden kann.

Der Aufbau der Batterie 4a entspricht im Wesentlichen der DIN EN 50342-2.

Die Batterie gemäß der Fig. 4a ist in der Fig. 4b in einer Draufsicht dargestellt. Zu erkennen sind die Flächen der Polnischen 26a, 26b. Das gegenständliche Startstrombegrenzungssystem 20 ist vorzugsweise innerhalb der Fläche der Polnische 26a angeordnet und kann sich in die Fläche des Versatzes 26c erstrecken.

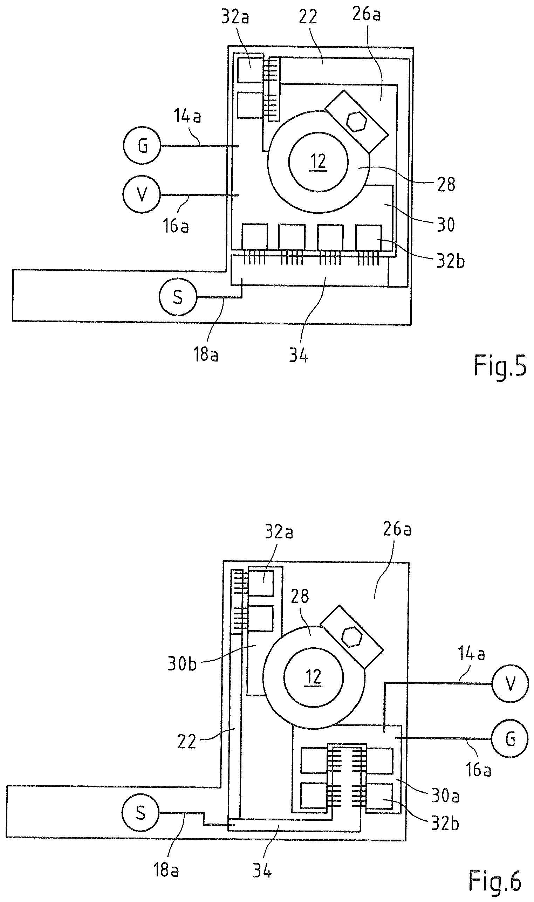

Fig. 5 zeigt die Anordnung eines Startstrombegrenzungssystems 20 in der Polnische 26a. Zu erkennen ist, dass an dem Batteriepol 12 eine Batteriepolklemme 28 angeschlossen ist. Stoffschlüssig mit der Batteriepolklemme 28 ist ein als Stromverteilschiene 30 gebildetes Anschlussteil angeschlossen. Im Bereich der Verbindung zwischen Batteriepolklemme 28 und Stromverteilschiene 30 kann die Stromverteilschiene 30 als Flachteil gebildet sein und sich beispielsweise parallel zu der x-y Ebene erstrecken. Dies wäre ein erster elektrischer Abgriff des ersten Anschlussteils. Das erste Anschlussteil kann sich ausgehend von diesem ersten elektrischen Abgriff in einen zweiten elektrischen Abgriff erstrecken, wobei dieser gegenüber dem ersten elektrischen Abgriff winklig angeordnet ist.

Vorzugsweise kann die Stromverteilschiene 30 als gebogenes Flachteil gebildet sein, wobei sich der zweite elektrische Abgriff, der zum Anschluss an jeweilige Schalter 32a, 32b gebildet ist, senkrecht zu der x-y Ebene erstrecken kann. Vorzugsweise erstreckt sich der zweite elektrische Abgriff teilweise parallel zu der x-z Ebene und teilweise parallel zu der y-z Ebene. Insbesondere der Bereich des zweiten elektrischen Abgriffs der in Richtung der Schalter 32a gerichtet ist, erstreckt sich parallel zu der y-z Ebene. Der Bereich, der in Richtung der Schalter 32b verläuft, ist vorzugsweise parallel zu der x-z Ebene angeordnet. Die Breitenausdehnungsrichtung der Stromverteilschiene im Bereich des zweiten Abgriffs verläuft vorzugsweise parallel zur z-Richtung. Eine Anordnung in einer jeweiligen Ebene bedeutet vorzugsweise, dass die Breitenausdehnungsrichtung des jeweiligen Flachteils parallel zu einer solchen Ebene verläuft.

Die Schalter 32a sind Halbleiterschalter und entsprechen den Schaltern des Schaltnetzes 22b. Die Schalter 32a verbinden die Stromverteilschiene 30 mit dem Widerstand 22. Der Widerstand ist vorzugsweise als formstabiler, gebogener Winkel geformt. Insbesondere ist der Widerstand 22 als Flachteil gebildet, wobei dessen Breitenausbreitungsrichtung in Richtung der z-Achse verläuft. Ein erster Schenkel des Widerstands 22 kann parallel zur x-z Ebene verlaufen. Ein zweiter, dazu winkliger Schenkel kann vorzugsweise parallel zu der y-z Ebene verlaufen. Ausgehend vom ersten Schenkel erstreckt sich der Widerstand 22 von den Schaltern 32a zum zweiten Anschlussteil 34.

Die Stromverteilschiene 30 ist mit ihrem ersten Abgriff mit den Schaltern 32b verbunden, die zur Stromstärke-Steuerung im Anlassfall gebildet sind und entsprechend angesteuert werden. Über diese Schalter 32b ist die Stromverteilschiene 30 mit dem zweiten Anschlussteil 34 verbunden. Ausgehend von dem zweiten Anschlussteil 34 erstreckt sich die Leitung 18a zum Starter 18. Der elektrische Anschluss zwischen der Leitung 18a und dem zweiten Anschlussteil 34 kann sich in den Versatz 26c erstrecken.

Fig. 6 zeigt ein weiteres Ausführungsbeispiel einer Anordnung eines Startstrombegrenzungssystems in einer Polnische 26a. Zu erkennen ist, dass ausgehend von der Batteriepolklemme 28 die Stromverteilschiene 30 einen ersten mit der Batteriepolklemme verbundenen elektrischen Abgriff 30a und einen zweiten mit der Batteriepolklemme 28 verbundenen elektrischen Abgriff 30b aufweist. Die elektrischen Abgriffe 30a, 30b sind elektrisch beide mit der Batteriepolklemme 28 verbunden, sind jedoch räumlich voneinander getrennt. Im Gegensatz dazu ist die Stromverteilschiene 30 gemäß der Fig. 5 einstückig und an ihren distalen Enden jeweils mit einem Schalternetz 32a, 32b verbunden.

Ausgehend von dem ersten Abgriff 30a, welcher als Flachteil gebildet sein kann und beispielsweise U-förmig geformt sein kann, kann eine Mehrzahl von Schaltern des Schalternetzes 32b ausgehen. Diese Schalter des Schalternetzes 32b können mit einem Ende eines zweiten Anschlussteils 34, welches in das U des ersten Abgriffes 30a eingreift, verbunden sein. Der erste Abgriff 30a, der zweite Abgriff 30 und/oder die Batteriepolklemme 28 kann Anschlüsse für die Generatorleitung 16a und die Leitung 14a zu dem Verbrauchsnetz 14 aufweisen.

Der zweite elektrische Abgriff 30b kann über ein Schalternetz 32a mit dem Widerstand 22 verbunden sein. Vorliegend verläuft der Widerstand als Flachteil parallel zur y-z Ebene.

Wie in den Figuren 5 und 6 zu erkennen ist, kann die Verbindung zwischen dem jeweiligen Schaltnetz 32a, 32b und dem Widerstand 22 zweiteilig sein. Insbesondere kann der Widerstand aus einer anderen Legierung als die Flachteile der Schaltnetze 32a, 32b gebildet sein. Die Flachteile, die die Schalnetze 32a, 32b mit dem Widerstand verbinden sind vorzugsweise aus Kupfer oder Legierungen davon. Der Widerstand 22 ist vorzugsweise aus einer Widerstandslegierung, wie z.B. einer Kupfer-Mangan Legierung mit weitern Bestandteilen aus Nickel, Aluminium, Zinn und/oder Eisen.

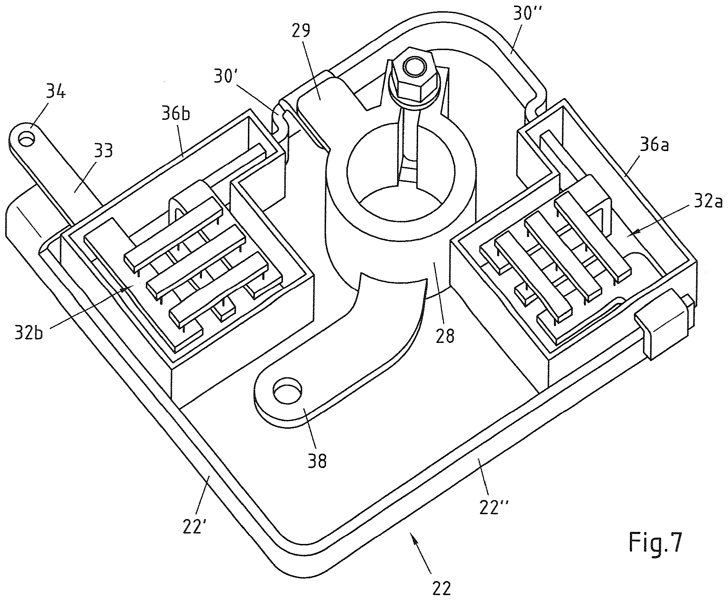

Fig. 7 zeigt eine weitere schematische Ansicht eines Aufbaus eines Startstromsbegrenzungssystems 20. Zu erkennen ist, dass ausgehend von der Batteriepolklemme 28 ein sich parallel zur x-y Ebene ausbreitender elektrischer Abgriff 29 erstreckt, der mit der Stromverteilschiene 30 verbunden ist. Die Stromverteilschiene 30 ist ausgehend von diesem elektrischen Abgriff 29 derart gebogen, dass ein erstes Ende 30' im verbauten Zustand parallel zur Begrenzungswand 8b und entlang der Begrenzungswand 8b verläuft. Ein zweites Ende 30" verläuft parallel zur Begrenzungswand 8a und entlang dieser.

Das erste Ende 30' mündet in einem Gehäuse 36b, in dem das Schalternetz 32b untergebracht ist. Ausgehend von diesem Schalternetz 32b erstreckt sich aus dem Gehäuse 36b ein als Flachteil gebildeter, elektrischer Abgriff 33, der außerhalb des Gehäuses 36b mit dem Widerstand 22 verbunden ist. Der Abgriff 33 ist mit dem Anschlussteil 34 verbunden.

Das zweite Ende 30" der Stromverteilschiene 30 erstreckt sich in ein Gehäuse 36a, in dem das Schalternetz 32a angeordnet ist.

Die Breitenausbreitungsrichtung des Widerstands ist parallel zur z-Achse. Eine erster Schenkel 22' des Widerstands 22 verläuft im verbauten Zustand parallel zur x-Achse. Ein zweiter Schenkel 22" des Widerstands verläuft im verbauten Zustand parallel y-Achse.

Der Schenkel 22" ist mit einem Ausgang des Schaltnetzes 32 a verbunden. Der Schenkel 22' ist mit einem Ausgang des Schaltnetzes 32b verbunden.

Der Widerstand 22 ist ein gebogener Winkel, der ausgehend vom Schenkel 22' sich in den hierzu rechtwinklig verlaufenden Schenkel 22" erstreckt. Der Schenkel 22' verläuft parallel und entlang der Außenkante 8c. Der Schenkel 22" verläuft parallel und entlang der Außenkante 8d. Der Widerstand 22 mündet in dem zweiten Anschlussteil 34.

In der zwischen den Schenkeln 22' und 22" aufgespannten Fläche ist ein elektrischer Abgriff 38 der Batteriepolklemme 28 vorgesehen. Über diesen elektrischen Abgriff 38, der vorzugsweise zwischen der Batteriepolklemme 28 und dem Widerstand 22 räumlich angeordnet ist, kann ein Verbrauchsnetzwerk und/oder ein Generator elektrisch mit dem Batteriepol 12 verbunden werden.

Der Zweig mit dem Widerstand 22 verläuft im Bereich der Außenkanten 8c und 8d, wohingegen der die Stromverteilschiene 30 und der Zweig mit der durch das Schaltnetz 32 b gebildeten Stromstärke-Steuerungseinrichtung im Bereich der Begrenzungswand 8b und der Außenkante 8c angeordnet ist. Somit überschneiden sich die von dem jeweiligen Zweigen genutzten Flächen nur teilweise und die jeweiligen Zweige sind überwiegend in voneinander verschiedenen Kreissegmenten um den Batteriepol 12 herum angeordnet.

Vorzugsweise umgreift die Stromverteilschiene 30 den Batteriepol 12 in einem ersten Kreissegment und der Widerstand 22 umgreift den Batteriepol 12 in einem zweiten Kreissegment.

Durch die Anordnung des Startstrombegrenzungssystems 20 in der Polnische 26a ist eine Bauraumoptimierung bei Gewährleistung elektrischer Sicherheit erreicht.

## Patentansprüche

1. Startstrombegrenzungssystem, insbesondere für Kraftfahrzeuge mit einem Verbrennungsmotor, mit:
- zumindest einem ersten mit einem Batteriepol (12) verbindbaren elektrischen Anschlussteil (30);
- einem zweiten mit einem Starter (18) verbindbaren elektrischen Anschlussteil (34), und
- einer zwischen dem ersten Anschlussteil (30) und dem zweiten Anschlussteil (34) geschalteten Parallelschaltung (20) aus einem ersten Zweig (24a) mit einer Stromstärke-Steuerungseinrichtung (24) und einem zweiten Zweig (22a) mit einem elektrischen Widerstand (22),
wobei der zweite Zweig (22a) mit dem elektrischen Widerstand, der erste Zweig mit der Stromstärke-Steuerungseinrichtung und das erste Anschlussteil (30) räumlich innerhalb der Polnische (26a) des Batteriepols angeordnet ist;
wobei die Stromstärke-Steuerungseinrichtung (24) aus parallel geschalteten Halbleiterschaltern (32b) als ein erstes Schalternetz gebildet wird;
**dadurch gekennzeichnet,**
- **dass** in dem zweiten Zweig (22a) mit dem elektrischen Widerstand (22) ein zweites Schalternetz (22b, 32a) vorgesehen ist, derart, dass sowohl das erste Schalternetz als auch das zweite Schalternetz (22b, 32a) reversibel schaltbar sind, um nach Abschluss eines Startvorgangs eine Leitung zwischen dem Startstrombegrenzungssystem und dem Starter (28) potentialfrei zu schalten.

2. Startstrombegrenzungssystem nach Anspruch 1, **dadurch gekennzeichnet, dass** der Widerstand (22) als Flachteil gebildet ist.

3. Startstrombegrenzungssystem nach Anspruch 1 oder 2, **dadurch gekennzeichnet, dass** der Widerstand (22) zumindest abschnittsweise parallel zu einer Begrenzungswand oder einer Außenkante der Polnische verläuft und/oder dass der Widerstand (22) in Teilen entlang der Begrenzungswand der Polnische oder der Außenkante der Polnische geführt ist.

4. Startstrombegrenzungssystem nach einem der vorangehenden Ansprüche,
**dadurch gekennzeichnet, dass** der Widerstand (22) als formstabiler Winkel gebildet ist.

5. Startstrombegrenzungssystem nach einem der vorangehenden Ansprüche,
**dadurch gekennzeichnet, dass** der Widerstand (22) ein Flachteil ist und in seiner Breitenausdehnungsrichtung in Teilen im Wesentlichen parallel zu einer Längsachse des Batteriepols verläuft.

6. Startstrombegrenzungssystem nach einem der vorangehenden Ansprüche,
**dadurch gekennzeichnet, dass** das erste Anschlussteil (30) eine Batteriepolklemme ist, und/oder dass das erste Anschlussteil (30) eine Stromverteilerschiene aufweist.

7. Startstrombegrenzungssystem nach einem der vorangehenden Ansprüche,
**dadurch gekennzeichnet, dass** das erste Anschlussteil (30) zumindest einen ersten mit der Batteriepolklemme verbundenen elektrischen Abgriff und einen zweiten mit der Batteriepolklemme verbundenen elektrischen Abgriff aufweist und dass der erste Abgriff mit dem ersten Zweig (24a) mit der Stromstärke-Steuerungseinrichtung (24) verbunden ist und der zweite Abgriff mit dem zweiten Zweig (22a, 32a) mit dem elektrischen Widerstand (22) verbunden ist.

8. Startstrombegrenzungssystem nach Anspruch 6, **dadurch gekennzeichnet, dass** die Stromverteilerschiene einen ersten Anschlussbereich zum Anschluss an die Batteriepolklemme aufweist und dass die Stromverteilschiene einen zum dem ersten Anschlussbereich winklig verlaufenden zweiten Anschlussbereich aufweist.

9. Startstrombegrenzungssystem nach Anspruch 8, **dadurch gekennzeichnet, dass** der zweite Anschlussbereich als Flachteil gebildet ist.

10. Startstrombegrenzungssystem nach einem der vorangehenden Ansprüche 8 oder 9, **dadurch gekennzeichnet, dass** der zweite Anschlussbereich zumindest abschnittsweise parallel zu einer Begrenzungswand oder einer Außenkante der Polnische verläuft und/oder dass der zweite Anschlussbereich in Teilen entlang der Begrenzungswand der Polnische oder der Außenkante der Polnische geführt ist.

11. Startstrombegrenzungssystem nach einem der vorangehenden Ansprüche 8 bis 10, **dadurch gekennzeichnet, dass** der zweite Anschlussbereich als formstabiler Winkel gebildet ist.

12. Startstrombegrenzungssystem nach einem der vorangehenden Ansprüche 8 bis 11, **dadurch gekennzeichnet, dass** der zweite Anschlussbereich ein Flachteil ist und in seiner Breitenausdehnungsrichtung in Teilen im Wesentlichen parallel zu einer Längsachse des Batteriepols verläuft.

13. Startstrombegrenzungssystem nach einem der vorangehenden Ansprüche,
**dadurch gekennzeichnet, dass** das erste Anschlussteil einen elektrischen Anschluss für einen Generator und/oder ein Verbrauchernetz des Kraftfahrzeugs aufweist.

14. Startstrombegrenzungssystem nach einem der vorangehenden Ansprüche,
**dadurch gekennzeichnet, dass** das erste und/oder das zweite Schalternetz (22b, 32a) jeweils zumindest zwei elektrisch parallel geschaltete Schalter aufweist.

15. Startstrombegrenzungssystem nach einem der vorangehenden Ansprüche,
**dadurch gekennzeichnet, dass** der Zweig (24a) mit der Stromstärke-Steuerungseinrichtung (24) überwiegend innerhalb eines ersten Kreissegments um den Batteriepol herum angeordnet ist und dass der Zweig (22a) mit dem elektrischen Widerstand (22) überwiegend innerhalb eines zweiten, vom ersten Kreissegment verschiedenen Kreissegments um den Batteriepol herum angeordnet ist.

## Claims

1. Starting current limiting system, in particular for motor vehicles with a combustion engine, with:
- at least a first electrical connection component (30) connectable to a battery pole (12);
- a second electrical connection component (34) connectable to a starter (18), and
- a parallel circuit (20) connected between the first connection component (30) and the second connection component (34) comprising a first branch (24a) with an amperage control device (24) and a second branch (22a) with an electrical resistor (22),
- wherein the second branch (22a) with the electrical resistor, the first branch with the amperage control device and the first connection component (30) are arranged spatially within the pole niche (26a) of the battery pole;
- wherein the amperage control device (24) is formed of semiconductor switches (32b) connected in parallel as a first switch network;
**characterised in that**
- a second switching network (22b, 32a) is provided in the second branch (22a) with the electrical resistor (22) in such a way that both the first switching network and the second switching network (22b, 32a) are reversibly switchable to switch a line between the starting current limiting system and the starter (28) potential-free after completion of a starting process.

2. Starting current limiting system according to claim 1, **characterized in that** the resistor (22) is formed as a flat part.

3. Starting current limiting system according to claim 1 or 2, **characterized in that** the resistor (22) runs at least in sections in parallel to a limiting wall or to an outer edge of the pole niche and/or that the resistor (22) is guided in parts along the limiting wall of the pole niche or along the outer edge of the pole niche.

4. Starting current limiting system according to one of the preceding claims, **characterized in that** the resistor (22) is formed as a dimensionally stable angle bracket.

5. Starting current limiting system according to one of the preceding claims, **characterized in that** the resistor (22) is a flat part and extends in its width extent direction in parts essentially parallel to a longitudinal axis of the battery pole.

6. Starting current limiting system according to one of the preceding claims, **characterized in that** the first connection component (30) is a battery pole terminal, and/or **in that** the first connection component (30) has a current distribution bar.

7. Starting current limiting system according to one of the preceding claims, **characterized in that** the first connection component (30) comprises at least a first electrical tap connected to the battery pole terminal and a second electrical tap connected to the battery pole terminal, and that the first tap is connected with the first branch (24a) to the current intensity control device (24) and the second tap is connected with the second branch (22a, 32a) to the electrical resistor (22).

8. Starting current limiting system according to claim 6, **characterized in that** the current distribution bar has a first connection region for connection to the battery pole terminal and that the current distribution bar has a second connection region extending at an angle to the first connection region.

9. Starting current limiting system according to claim 8, **characterized in that** the second connection region is formed as a flat part.

10. Starting current limiting system according to one of the preceding claims 8 or 9, **characterized in that** the second connection region runs at least in sections parallel to a limiting wall or to an outer edge of the pole niche and/or that the second connection region is guided in parts along the limiting wall of the pole niche or along the outer edge of the pole niche.

11. Starting current limiting system according to one of the preceding claims 8 to 10, **characterized in that** the second connection region is formed as a dimensionally stable angle bracket.

12. Starting current limiting system according to one of the preceding claims 8 to 11, **characterized in that** the second connection region is a flat part and extends in its width extent direction in parts essentially parallel to a longitudinal axis of the battery pole.

13. Starting current limiting system according to one of the preceding claims, **characterized in that** the first connection component has an electrical connection for a generator and/or for a consumer network of the motor vehicle.

14. Starting current limiting system according to one of the preceding claims, **characterized in that** the first and/or the second switch network (22b, 32a) respectively has at least two switches electrically connected in parallel.

15. Starting current limiting system according to one of the preceding claims, **characterized in that** the branch (24a) with the amperage control device (24) is arranged predominantly within a first circle segment around the battery pole, and that the branch (22a) with the electrical resistor (22) is arranged predominantly within a second circle segment around the battery pole, different from the first circle segment.

## Revendications

1. Système de limitation de courant de démarrage, en particulier pour des véhicules automobiles équipés d'un moteur à combustion, comprenant :au moins une première pièce de raccordement électrique (30) reliable à un pôle de batterie (12) ;
une deuxième pièce de raccordement électrique (34) reliable à un démarreur (18), et un circuit électrique connecté entre la première pièce de raccordement (30) et la deuxième pièce de raccordement (30).
un circuit parallèle (20) comprenant une première branche (24a) avec un dispositif de commande d'intensité de courant (24) et une deuxième branche (22a) avec une résistance électrique (22),
où la deuxième branche (22a) avec la résistance électrique, la première branche avec le dispositif de commande d'intensité de courant et la première pièce de raccordement (30) sont disposés spatialement à l'intérieur de la niche de pôle (26a) du pôle de batterie ; où le dispositif de commande d'intensité de courant (24) est formé de commutateurs à semi-conducteurs (32b) connectés en parallèle sous forme d'un premier réseau de commutateurs ;
**caractérisé en ce que**
dans la deuxième branche (22a) avec la résistance électrique (22), un deuxième réseau de commutateurs (22b, 32a) est prévu, de telle sorte que le premier réseau de commutateurs et le deuxième réseau de commutateurs (22b, 32a) sont commutable de manière réversible pour commuter sans potentiel une ligne entre le système de limitation de courant de démarrage et le démarreur (28) après une finalisation d'un processus de démarrage.

2. Système de limitation de courant de démarrage selon la revendication 1, **caractérisé en ce que** la résistance (22) est formée comme une pièce plate.

3. Système de limitation de courant de démarrage selon la revendication 1 ou 2, **caractérisé en ce que** la résistance (22) s'étend au moins par sections parallèlement à une paroi de délimitation ou à un bord extérieur de la niche de pôle et/ou que la résistance (22) est guidée en partie le long de la paroi de délimitation de la niche de pôle ou du bord extérieur de la niche de pôle.

4. Système de limitation de courant de démarrage selon l'une des revendications précédentes, **caractérisé en ce que** la résistance (22) est formée comme une équerre indéformable.

5. Système de limitation de courant de démarrage selon l'une des revendications précédentes, **caractérisé en ce que** la résistance (22) est une pièce plate et s'étend dans sa direction d'extension en largeur dans des parties essentiellement parallèlement à un axe longitudinal du pôle de batterie.

6. Système de limitation de courant de démarrage selon l'une des revendications précédentes, **caractérisé en ce que** la première pièce de raccordement (30) est une borne de batterie, et/ou que la première pièce de raccordement (30) comprend une barre de distribution de courant.

7. Système de limitation de courant de démarrage selon l'une des revendications précédentes, **caractérisé en ce que** la première pièce de raccordement (30) comprend au moins une première prise électrique connectée à la borne de batterie et une deuxième prise électrique connectée à la borne de batterie, et que la première prise est connectée à la première branche (24a) avec le dispositif de commande d'intensité de courant (24) et que la deuxième prise est connectée à la deuxième branche (22a, 32a) avec la résistance électrique (22).

8. Système de limitation de courant de démarrage selon la revendication 6, **caractérisé en ce que** la barre de distribution de courant présente une première zone de raccordement pour la connexion à la borne de batterie et **en ce que** la barre de distribution de courant présente une deuxième zone de raccordement s'étendant de manière angulaire par rapport à la première zone de raccordement.

9. Système de limitation de courant de démarrage selon la revendication 8, **caractérisé en ce que** la deuxième zone de raccordement est formée comme une partie plate.

10. Système de limitation de courant de démarrage selon l'une des revendications 8 ou 9 ci-dessus 9, **caractérisé en ce que** la deuxième zone de raccordement s'étend au moins par sections parallèlement à une paroi de délimitation ou à un bord extérieur de la niche de pôle et/ou que la deuxième zone de raccordement est guidée en partie le long de la paroi de délimitation de la niche de pôle ou du bord extérieur de la niche de pôle.

11. Système de limitation de courant de démarrage selon l'une des revendications 8 à 10 ci-dessus 10, **caractérisé en ce que** la deuxième zone de raccordement est formée comme une équerre indéformable.

12. Système de limitation de courant de démarrage selon l'une des revendications 8 à 10 ci-dessus 11, **caractérisé en ce que** la deuxième zone de raccordement est une partie plate et s'étend dans sa direction d'extension en largeur dans des parties essentiellement en parallèle à un axe longitudinal du pôle de batterie.

13. Système de limitation de courant de démarrage selon l'une des revendications précédentes, **caractérisé en ce que** la première pièce de raccordement a une connexion électrique pour un générateur et/ou un réseau de consommateurs du véhicule automobile.

14. Système de limitation de courant de démarrage selon l'une des revendications précédentes, **caractérisé en ce que** le premier et/ou le deuxième réseau de commutateurs (22b, 32a) a respectivement au moins deux commutateurs montés électriquement en parallèle.

15. Système de limitation de courant de démarrage selon l'une des revendications précédentes, **caractérisé en ce que** la branche (24a) comprenant le dispositif de commande d'intensité de courant (24) est disposée pour la plupart à l'intérieur d'un premier segment de cercle autour du pôle de batterie et que la branche (22a) comprenant la résistance électrique (22) est disposée pour la plupart à l'intérieur d'un deuxième segment de cercle autour du pôle de batterie, différent du premier segment de cercle.
